(19) Europäisches Patentamt
European Patent Office
Office européen des brevets

(11) **EP 1 614 923 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(21) Anmeldenummer: **05014044.1**

(22) Anmeldetag: **29.06.2005**

(51) Int Cl.:
**F16D 48/06** *(2006.01)*

(54) **Verfahren der Einstellung des Kupplungsmoments bei einem clutch-by-wire System**

Method for adjusting the clutch torque in a clutch-by-wire system

Procédé pour régler le couple de l'embrayage dans un système clutch-by-wire

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **06.07.2004 DE 102004032593**

(43) Veröffentlichungstag der Anmeldung:
**11.01.2006 Patentblatt 2006/02**

(73) Patentinhaber: **LuK Lamellen und Kupplungsbau Beteiligungs KG
77815 Bühl (DE)**

(72) Erfinder:
• **Werner, Olaf, Dr.
77815 Bühl (DE)**
• **Jung, Mario
76547 Sinzheim (DE)**

(56) Entgegenhaltungen:
**FR-A- 2 837 888          US-A- 5 083 647
US-A- 5 718 316          US-A1- 2003 134 713**

**Beschreibung**

Die vorliegende Erfindung betrifft ein Verfahren der Einstellung des Kupplungsmoments einer mittels eines Aktors in Abhängigkeit von einer durch einen Fahrer vorgenommenen Kupplungspedalbetätigung betätigten Kupplung beim Einkuppelvorgang nach dem Oberbegriff des Anspruchs 1.

Es handelt sich also um ein Verfahren zum Einstellen des Kupplungsmoments einer Kupplung beim Einkuppelvorgang, wobei die Betätigung der Kupplung, d.h. also das Öffnen und Schließen der Kupplung nicht vom Fahrer des Fahrzeugs über eine Betätigung des Kupplungspedals direkt durchgeführt wird, sondern die Betätigung des Kupplungspedals über beispielsweise einen Pedalwegerfassungssensor oder dergleichen erfasst und von einem Steuergerät ausgewertet wird, welches dann beispielsweise in Abhängigkeit von Fahrzeugzustandsparametern einen Aktor zum Öffnen und Schließen der Kupplung ansteuert, so dass eine direkte mechanische oder hydraulische Verbindung zwischen dem Kupplungspedal und dem Ausrücksystem der Kupplung nicht mehr vorliegt. Ein solches System wird oftmals auch als clutch-by-wire-System bezeichnet.

Ein Vorteil eines solchen clutch-by-wire-Systems liegt beispielsweise darin, Einkuppelschläge mit dabei einhergehenden Beeinträchtigungen des Fahrtkomforts vermeiden zu können. Auch kann mit einem solchen clutch-by-wire-System zur effizienten Schwingungsisolierung im Triebstrang des Fahrzeugs eine Schlupfregelung realisiert werden. Eine Anforderung an ein solches clutch-by-wire-System liegt aber auch darin, Eingriffe in das Kupplungsmoment in weitgehend für den Fahrer nicht spürbarer Weise durchzuführen. Darüber hinaus soll der Fahrer eines mit einem solchen System ausgestatteten Fahrzeugs auf sein Fahrverhalten aber auch ein Feedback erhalten, welches er von Fahrzeugen mit mechanischer oder hydraulischer Kraftübertragungsstrecke zwischen dem Kupplungsbetätigungspedal und dem Ausrücksystem der Kupplung kennt.

In der US 5,083,647 wird eine Kupplungssteuerung eines Lastschaltgetriebes beschrieben, wobei ein Kupplungsbetätigungssignal in Abhängigkeit von der Stellung des Kupplungspedals oder der Motordrehzahl bei einem ausgewählten Gang bestimmt wird.

Ausgehend hiervon liegt der vorliegenden Erfindung die Aufgabe zugrunde, ein Verfahren der Einstellung des Kupplungsmoments bei einem solchen clutch-by-wire-System zu schaffen, welches einerseits ein sanftes Einkuppeln ermöglicht und andererseits dem Fahrer ein ausreichendes Feedback auf sein Fahrverhalten hin liefert.

Die Erfindung schafft nunmehr zur Lösung dieser Aufgabe ein Verfahren der Einstellung des Kupplungsmoments einer mittels eines Aktors in Abhängigkeit von einer durch einen Fahrer vorgenommenen Kupplungspedalbetätigung betätigten Kupplung beim Einkuppelvorgang derart, dass ein Fahrerwunschkupplungsmoment und ein vorbestimmbares Grenzkupplungsmoment ermittelt werden und das Kupplungsmoment nach dem Verfahren auf den kleineren der ermittelten Werte eingestellt wird. Durch die Limitierung des Kupplungsmoments auf den kleineren der beiden Werte wird erreicht, dass einerseits ein haftungsfreier Einkuppelvorgang mit einer entsprechenden Schlupfphase ermöglicht wird und andererseits die zum Einkuppeln erforderliche Überanpressung so gering bemessen ist, dass sie mittels eines Schlupfregelungsvorgangs verringert werden kann.

Die Erfindung sieht dabei vor, dass das Fahrerwunschkupplungsmoment in Abhängigkeit des Pedalwegs des Kupplungsbetätigungspedals ermittelt wird.

Eine Möglichkeit der Bestimmung des Fahrerwunschkupplungsmoments besteht dabei darin, diesen Wert anhand eines vom Kupplungspedalweg abhängigen Kennlinienwertes zu ermitteln. Über eine entsprechende Abstimmung der Kennlinie kann daher die generelle Einkuppelcharakteristik beeinflusst werden, wobei in diesem Zusammenhang beispielsweise eine kupplungspedalwegsabhängige Hinterlegung der Kennlinie zur Durchführung des Verfahrens möglich ist.

Daneben ist es nach der Erfindung aber auch vorgesehen, dass das Fahrerwunschkupplungsmoment in Abhängigkeit des Pedalwegs und des Motormoments ermittelt werden kann oder aber auch in Abhängigkeit des Pedalwegs, d.h. also der Betätigung des Kupplungspedals, und dem Grad der Betätigung des Fahrpedals oder Gaspedals des Fahrzeugs. Damit wird erreicht, dass das Fahrerwunschkupplungsmoment direkt anhand der beiden genannten Parameter, nämlich des Kupplungspedalwegs und der Betätigung des Fahrpedals ermittelt wird, so dass zur Plausibilisierung des Fahrpedalsignals beispielsweise über den CAN-Bus erhaltene Motormomentenwerte herangezogen werden können, diese aber nicht notwendigerweise erforderlich sind.

Nach der Erfindung wird das Fahrerwunschkupplungsmoment direkt in Abhängigkeit des Motormoments bzw. der Fahrpedalbetätigung verändert, so dass es möglich ist, zur Bestimmung des Fahrerwunschkupplungsmoments neben dem Kupplungspedalweg eine in Abhängigkeit des vom Fahrer des Fahrzeugs angeforderten Momentenwerts hinterlegte Kennlinienschar auszuwerten und das Fahrerwunschkupplungsmoment sowohl in Abhängigkeit des Kupplungspedalwegs als auch in Abhängigkeit des Motormoments bzw. der Fahrpedalstellung zu ermitteln. In diesem Zusammenhang wird auf die nachstehend wiedergegebene graphische Darstellung hingewiesen, die auf der X-Achse einen beispielsweise auf Prozentbasis vorliegenden Kupplungspedalbetätigungswert zeigt und auf der Y-Achse zu unterschiedlichen Motormomenten gehörige drei unterschiedliche Kennlinien einer Kennlinienschar.

Wenn nunmehr das Kupplungspedal vom Fahrer vollständig betätigt ist, die Betätigung also 100 % beträgt, so hat der Fahrer damit seinem Wunsch Ausdruck verliehen, die Kupplung vollständig zu öffnen, so dass das Fahrerwunschkupplungsmoment den Wert Null annimmt. Bei einer entsprechend vollständig geschlossene Kupplung nimmt dahingegen das Fahrerwunschkupplungsmoment einen jeweils maximalen Wert an, wobei anhand der unterschiedlichen Kennlinien und deren Werte beim Kupplungspedalwegwert von 0 % deutlich wird, dass über den zur Verfügung stehenden Kupplungspedalwegbereich von 0 % bis 100 % im Fall der Kennlinie2 mit TrqEng = ¼ TrqEngMax ein zum Kennlinienwert Y1 gehöriger Fahrerwunschkupplungsmomentenbereich abgedeckt wird und mit dem gleichen Kupplungspedalwegsbereich bei der Kennlinie2 mit einem angeforderten Motormoment, welches dem halben maximalen Motormoment entspricht, also TrqEng = ½ TrqEngMax, ein dem Wert Y2 entsprechendes Fahrerwunschkupplungsmoment, so dass diese Erläuterung deutlich macht, dass in Abhängigkeit vom gewünschten Motormoment die Modulierbarkeit des Fahrerwunschkupplungsmoments aufgrund des zur Verfügung stehenden gleichbleibenden Kupplungspedalwegsbereichs 0 % bis 100 % erhöht wird, weil der zur Verfügung stehende Kupplungspedalweg an das aktuelle Motormoment angepasst wird.

Nach dem erfindungsgemäßen Verfahren ist es vorgesehen, dass das vorstehend genannte Grenzkupplungsmoment in Abhängigkeit des Motormoments und/oder eines Momentenoffsets und/oder eines geschwindigkeitsabhängigen Wertes der Betätigung des Kupplungspedals ermittelt wird.

Nun ist es nach dem erfindungsgemäßen Verfahren vorgesehen, das Grenzkupplungsmoment nach der nachfolgenden Formel zu bestimmen:

$$TrqClutchLimit = TrqEng * kme + TrqOffset + grad (ClPedalWert) * GradFaktor,$$

mit:

TrqClutchLimit: Grenzkupplungsmoment
TrqEng: Motormoment
kme: Faktor
TrqOffset: Momentenoffset
grad (ClPedalWert) * GradFaktor: kupplungspedalgradientenabhängiger Anteil.

Damit fließt in das Grenzkupplungsmoment mit dem Produkt aus Motormoment TrqEng und dem Faktor kme ein Anteil ein, der die beim Einkuppeln erforderliche Überanpressung repräsentiert. Der Faktor kme kann dabei während der Einkuppelphase auch zeitgesteuert erhöht werden, um den Schlupfabbau auch bei einer verstimmten Kupplungskennlinie zu ermöglichen. Mit dem Momentenoffset TrqOffset wird ein Sicherheitsfaktor eingefügt, der das Einkuppeln auch bei niedrigen Motormomenten sicherstellt, wenn also beispielsweise eine Situation gegeben ist, dass mit nur sehr geringer Fahrpedalbetätigung an einer Steigung ein sicheres Einkuppeln zum Vermeiden einer übermäßigen Belastung der Kupplung erreicht werden soll. Mittels des kupplungspedalgradientenabhängigen Anteils grad (CIPedalWert) * Grad-Faktor wird dem Fahrer ein ausreichendes Feedback zur Verfügung gestellt, da mit diesem Anteil bei einem vom Fahrer beispielsweise beabsichtigten Kupplungsschlag ein hoher gradientenabhängiger Term in die Berechnung des Kupplungsmoments eingeht. Bei einem solchen Kupplungsschlag führt der Fahrer das Kupplungspedal vom Pedalwert 100 % ausgesprochen schnell zum Pedalwert 0 %, so dass in diesem Fall auch das Fahrerwunschmoment hoch ist und somit auch das Kupplungsmoment als kleinerer der beiden Werte hoch ist und der Fahrer damit auf seine Betätigung des Kupplungspedals hin eine entsprechende Reaktion des Systems, also ein Feedback erhält, das seiner Erfahrung entspricht, die er auch bei einer beispielsweise hydraulisch betätigten Kuplung macht.

Damit stellt das nach der Erfindung vorgesehene Verfahren der Einstellung des Kupplungsmoments beim Einkuppelvorgang sicher, dass kurz vor der Synchronphase, d.h. also der Drehzahlgleichheit von Getriebe und Motor, keine zu große Überanpressung realisiert ist, da nach dem erfindungsgemäßen Verfahren von vorneherein das Kupplungsmoment auf den kleineren Wert aus Fahrerwunschkupplungsmoment und vorbestimmbarem Grenzkupplungsmoment eingestellt bzw. limitiert wird. Die zum sicheren Einkuppeln erforderliche nunmehr vorliegende geringe Überanpressung kann dann durch den Einsatz eines Schlupfregelungsverfahrens schnell abgebaut werden, so dass es nach einer Weiterbildung der Erfindung auch sinnvoll ist, die Schlupfregelung frühzeitig in der Schlupfphase zu aktivieren, beispielsweise bei einer Schlupfdrehzahl von 300 U/min, da durch die Schlupfregelung damit sichergestellt ist, dass es während des Einkuppelvorgangs nicht zu einer komfortmindernden Haftbedingung kommt.

Nach einer Weiterführung der Erfindung ist es auch vorgesehen, dass das Motormoment um einen von der Einkuppelzeit abhängigen Wert zur Herbeiführung einer Überanpressung beim Einkuppelvorgang modifiziert werden kann. Dieser modifizierte Wert kann darüber hinaus nach einer Weiterbildung der Erfindung genauso wie der Momentenoffset und auch der geschwindigkeitsabhängige Wert der Pedalbetätigung in Abhängigkeit von Fahrzeugzustandsparametern verändert werden, wobei in diesem Zusammenhang als Fahrzeugzustandsparameter beispielsweise die festgestellte Gangstufe, die Motordrehzahl, die Last in Form eines Pedalwerts oder des beispielsweise über den CAN-Bus mitgeteilten Motormoments zu nennen sind. Damit können Einkuppelvorgänge an jeweilige Fahrsituationen angepasst werden und eine Haftbedingung beim Einkuppelvorgang sicher vermieden werden.

So kann mit der gewählten Strategie beispielsweise auch ein zu hoher Energieeintrag in die Kupplung bei hohen Motordrehzahlen und zu lange schlupfender Kupplung vermieden werden, da die variablen Parameter dann so gewählt werden können, dass der Einkuppelvorgang schnell abläuft. Neben diesem Vorteil wird durch die Anwendung des Verfahrens zum haftungsfreien Einkuppeln und Übergang in die Schlupfregelung auch der Abbau von Momentenspitzen erreicht, so dass ein eventuell vorhandenes Zweimassenschwungrad weniger belastet wird. Auch können Einkuppelschläge vermieden werden, was der Erhöhung des Fahrkomforts zuträglich ist. Aufgrund der Möglichkeit der motormomentenabhängigen oder fahrpedalbetätigungsabhängigen Spezifikation des Fahrerwunschkupplungsmoments ist es auch möglich, die Modulierbarkeit des zur Verfügung stehenden Kupplungspedalwegs relativ zum Motormoment zu erhöhen. Aufgrund der in die Ermittlung des Grenzkupplungsmoments eingehenden unterschiedlichen Parameter berücksichtigt das erfindungsgemäße Verfahren auch die Erwartungshaltung des Fahrers, nämlich ein ausreichendes Feedback auf sein Verhalten hin zu erhalten. Darüber hinaus kann durch die Modifizierung der in das Grenzkupplungsmoment eingehenden Parameter eine weitgehende Modifizierbarkeit des Kupplungsmoments beim Einkuppeln erreicht werden.

Mit der nach der Erfindung vorgesehenen Einstellung des Kupplungsmoments bei einem clutch-by-wire-System ist ein haftungsfreies Einkuppeln und ein haftungsfreier Übergang in die Schlupfregelungsphase möglich. Darüber hinaus stellt das erfindungsgemäße Verfahren auch sicher, dass kurz vor Erreichen von Drehzahlgleichheit von Getriebe und Motor keine zu große Überanpressung vorhanden ist und diese darüber hinaus auch über eine Verwendung einer Schlupfregelung schnell abgebaut werden kann.

**Patentansprüche**

1. Verfahren der Einstellung des Kupplungsmoments einer mittels eines Aktors in Abhängigkeit von einer durch einen Fahrer vorgenommenen Kupplungspedalbetätigung betätigten Kupplung beim Einkuppelvorgang, wobei ein Fahrerwunschkupplungsmoment, das in Abhängigkeit vom Pedalweg der Kupplung und des Motormoments und/oder der Fahrpedalbetätigung ermittelt wird, und ein vorbestimmbares Grenzkupplungsmoment ermittelt werden und das Kupplungsmoment auf den kleineren der ermittelten Werte eingestellt wird, **dadurch gekennzeichnet, dass** das Grenzkupplungsmoment in Abhängigkeit des Motormoments, eines Momentenoffsets als

$$\text{TrqClutchLimit = TrqEng * kme + TrqOffset + grad (ClPedalWert) * GradFaktor,}$$

mit:

TrqClutchLimit: Grenzkupplungsmoment
TrqEng: Motormoment
kme: Faktor
TrqOffset: Momentenoffset
grad (ClPedalWert) * GradFaktor: kupplungspedalgradientenabhängiger Anteil ermittelt wird.

**2.** Verfahren nach Anspruch 1, **dadurch gekennzeichnet, dass** in Abhängigkeit vom Motormoment die Veränderung des Kupplungsmoments pedalwegvariabel ist.

**3.** Verfahren nach einem der vorstehenden Ansprüche, **dadurch gekennzeichnet, dass** das Kupplungsmoment beim Erreichen einer vorbestimmbaren Schlupfdrehzahl auf einen vom Motormoment abhängigen Wert eingestellt wird, der mittels eines Schlupfregelungsvorgangs verringerbar ist.

**4.** Verfahren nach Anspruch 1, **dadurch gekennzeichnet, dass** das Motormoment um einen von der Einkuppelzeit abhängigen Wert zur Herbeiführung einer Überanpressung beim Einkuppelvorgang modifiziert wird.

**5.** Verfahren nach Anspruch 1 oder 4, **dadurch gekennzeichnet, dass** der von der Einkuppelzeit abhängige Wert und/oder der Momentenoffset und/oder der geschwindigkeitsabhängige Wert der Pedalbetätigung in Abhängigkeit von Fahrzeugzustandsparametern veränderbar ist.

**6.** Verwendung des Verfahrens nach einem der vorstehenden Ansprüche zum haftzustandsfreien Einkuppeln und Übergang in die Schlupfregelung.

**Claims**

**1.** Method for adjusting the clutch torque during a clutch engagement process in a clutch which is activated by means of an actuator as a function of a clutch pedal activation which is performed by a driver, wherein a driver's request clutch torque which is determined as a function of the pedal travel of the clutch and of the torque of the engine and/or the activation of the actuator pedal, and a predeterminable limiting clutch torque is determined and the clutch torque is adjusted to the smaller of the values which are determined, **characterized in that** the limiting clutch torque is determined as a function of the torque of the engine, of a torque offset as

$$\text{TrqClutchLimit=TrqEng*kme+TrqOffset+grad(ClPedalValue)*}$$
$$\text{GradFactor,}$$

where

TrqClutchLimit: Limiting clutch torque
TrqEng: Torque of the engine
Kme: Factor
Trqoffset: Torque offset
Grad(ClPedalValue)*GradFactor: Portion which is dependent on gradient of clutch pedal.

**2.** Method according to Claim 1, **characterized in that** the charge in the clutch torque varies in accordance with the pedal travel and as a function of the engine torque.

**3.** Method according to one of the preceding claims, **characterized in that** the clutch torque is adjusted to a value which can be reduced by means of a traction control process and which is dependent on the torque of the engine when a predeterminable slip speed is reached.

**4.** Method according to Claim 1, **characterized in that** the torque of the engine is modified by a value which is dependent on the clutch engagement time in order to bring about excessive contact pressure during the clutch engagement process.

**5.** Method according to Claim 1 or 4, **characterized in that** the value which is dependent on the clutch engagement time and/or the torque offset and/or the speed-dependent value of the activation of the pedal can be changed as a function of the vehicle state parameters.

**6.** Use of the method according to one of the preceding claims for adhesion-state-free clutch engagement and changeover into the traction control mode.

**Revendications**

**1.** Procédé pour ajuster le couple d'embrayage d'un embrayage actionné au moyen d'un actionneur en fonction d'un actionnement de la pédale d'embrayage effectué par un conducteur lors d'une opération d'embrayage, dans lequel un couple d'embrayage souhaité par le conducteur, qui est détecté en fonction de la course de la pédale de l'embrayage et du couple du moteur et/ou de l'actionnement de la pédale d'accélérateur, et un couple d'embrayage limite prédéfinissable sont détectés, et le couple d'embrayage est ajusté à la plus petite valeur des valeurs détectées, **caractérisé en ce que**
le couple d'embrayage limite est détecté en fonction du couple du moteur, d'un décalage de couple sous la forme suivante :

$$TrqClutchLimit = TrqEng*kme + TrqOffset + grad(CIPedalWert)*GradFaktor,$$

avec

TrqClutchLimit : Couple d'embrayage limite
TrqEng : Couple du moteur
kme : Facteur
TrqOffset : Décalage de couple
grad(CIPedalWert)*GradFaktor : proportion dépendant du gradient de la pédale d'embrayage

**2.** Procédé selon la revendication 1, **caractérisé en ce qu'**en fonction du couple du moteur, la variation du couple d'embrayage est variable suivant la course de la pédale.

**3.** Procédé selon l'une quelconque des revendications précédentes, **caractérisé en ce que** le couple d'embrayage, à l'atteinte d'une vitesse de rotation de patinage prédéfinissable, est ajusté à une valeur dépendant du couple du moteur, qui peut être réduite au moyen d'une opération de régulation du patinage.

**4.** Procédé selon la revendication 1, **caractérisé en ce que** le couple du moteur est modifié d'une valeur dépendant du temps d'embrayage pour provoquer une surpression de contact lors de l'opération d'embrayage.

**5.** Procédé selon la revendication 1 ou 4, **caractérisé en ce que** la valeur dépendant du temps d'embrayage et/ou le décalage de couple et/ou la valeur de l'actionnement de la pédale dépendant de la vitesse peuvent être modifiés en fonction de paramètres d'état du véhicule.

**6.** Utilisation du procédé selon l'une quelconque des revendications précédentes pour l'embrayage sans adhérence et pour le transfert à la régulation de patinage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5083647 A